Europäisches Patentamt

European Patent Office

Office européen des brevets

(11) Veröffentlichungsnummer: **0 374 285**

**A1**

(12) **EUROPÄISCHE PATENTANMELDUNG**

(21) Anmeldenummer: 88121385.4

(22) Anmeldetag: 21.12.88

(51) Int. Cl.5: **H04N 1/21, H04N 5/76**

(43) Veröffentlichungstag der Anmeldung:
**27.06.90 Patentblatt 90/26**

(84) Benannte Vertragsstaaten:
**DE FR GB IT NL**

(71) Anmelder: **Deutsche ITT Industries GmbH**
**Hans-Bunte-Strasse 19 Postfach 840**
**D-7800 Freiburg(DE)**

(72) Erfinder: **Micic, Ljubomir, Dipl.-Ing.**
**Sundgauallee 15**
**D-7800 Freiburg(DE)**
Erfinder: **Mehrgardt, Sönke, Dr. rer. nat.**
**Häglestrasse 26**
**D-7806 March(DE)**

(54) **Tragbare elektronische Bildaufnahmeeinrichtung.**

(57) Eine Kamera (k) zur Aufnahme von Einzelbildern oder Bilderfolgen erzeugt elektrische Bildsignale, die digitalisiert (w1) und mittels einer Signalverarbeitungs- und Steuerschaltung (c) in einem Festkörperspeicher (r) mit nichtflüchtigen Speicherzellen eingeschrieben werden. Da die Speichereinrichtung (r) kein mechanisch zu bewegendes Speichermedium enthält, ist die gesamte Stromaufnahme vergleichbar gering.

## Tragbare elektronische Bildaufnahmeeinrichtung

Die Erfindung betrifft eine tragbare elektronische Bildaufnahmeeinrichtung, die sich zur Bildspeicherung elektronischer Speichermittel bedient. Derartige Bildaufnahmeeinrichtungen gewinnen immer größere Verbreitung, weil das aufgenommene Bild zusammen mit dem zugehörigen Ton über einen üblichen Fernsehempfänger sofort wiedergebbar ist und weil das jeweilige Speichermedium beliebig oft gelöscht und wieder verwendet werden kann, was bei dem sonst üblichen lichtempfindlichen Film nicht möglich ist.

Unter dem Begriff Kamerarecorder oder abgekürzt "Kamcorder" sind beispielsweise derartige Bildaufnahmeeinrichtung zusammengefaßt, die als Speichereinrichtung eine Videokassette mit einem spulenförmig aufgewickelten Magnetband enthalten. Zur Aufnahme und Wiedergabe ist neben der rein elektronischen Signalaufbereitung eine aufwendige und störanfällige Mechanik für den Bandtransport erforderlich, welche die präzise Umspulung der Kassette mit möglichst genauer Bandgeschwindigkeit bewirkt. Die Leistungsaufnahme dieser Mechanik erfordert auch einen relativ großen Energiespeicher in Form einer mitzuführenden Batterie, wenn das Gerät netzunabhängig über eine längere Zeit bedienbar bleiben soll. Die Vereinigung aller erforderlichen Funktionsteile, wie z.B. Kamera, Netzteil mit Batterien und Ladegerät, Signalverarbeitungsschaltungen und Videokassette usw. in einem einzigen Gehäuse führt daher zu einem relativ schweren unhandlichen Gerät.

Wesentlich handlicher sind die ebenfalls mit einer elektronischen Bildaufnahmeeinrichtung ausgestatteten "Still-Video-Kameras", in denen ein CCD-Chip das aufgenommene Bild punktweise in elektronische Signale umwandelt, die dann auf einer kleinen Diskette - statt des Magnetbandes der Kamcorder - gespeichert werden. Dabei ist eine Einzelbildspeicherung von 25 Vollbildern, aber auch die Aufnahme einer schnellen Bild- oder Szenenfolge möglich. Nachteilig ist bei dieser Bildaufnahmeeinrichtung, daß die Diskette eine Mechanik erforderlich macht. Eine derartige Still-Video-Kamera und übliche Kamcorder sind beispielsweise in "Funkschau", Heft 22, 1986, Seiten 40 bis 42 beschrieben.

Es ist daher Aufgabe der in den Ansprüchen gekennzeichneten Erfindung, eine möglichst handliche elektronische Bildaufnahmeeinrichtung anzugeben, die für die Bildspeicherung ohne mechanisch zu bewegende Teile auskommt und deren Energiebedarf möglichst klein ist.

Der Grundgedanke der Erfindung besteht dabei darin, das mechanisch bewegte Speichermedium durch feststehende programmierbare Festkörperspeicher mit nichtflüchtigen Speicherzellen zu ersetzen, deren Speicherumfang infolge technologischer Fortentwicklung immer weiter zunimmt. Das zu speichernde Bildsignal wird dabei digitalisiert und einer Signalverarbeitungs- und Steuerschaltung zugeführt, welche die Daten schließlich in den Speicher einschreibt und für die Wiedergabe auch wieder ausliest. Für die Bildwiedergabe über einen Fernsehempfänger ist ein normgemäßes Farb-Bild-Austast-Synchron-Signalgemisch ( = FBAS-Signal) zu erzeugen.Hierzu werden den aus dem Speicher ausgelesenen Bilddaten die zugehörigen Austast- und Synchronsignale entweder digital vor oder analog hinter dem ausgangsseitigen Digital-Analog-Umsetzer hinzugefügt.

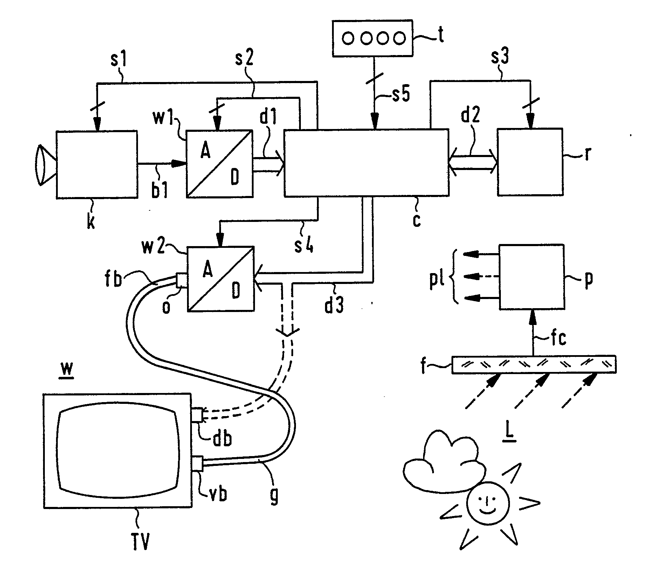

Die Erfindung wird nun anhand der Figur der Zeichnung näher erläutert, die schematisch als Blockschaltbild ein vorteilhaftes Ausführungsbeispiel der Erfindung zeigt.

Den Eingang bildet die Kamera k, die auf übliche Weise mittels Zeilenabtastung das analog Bildsignal $b1$ erzeugt, das mittels des Analog-Digitalumsetzers $w1$ digitalisiert wird und als digitales Bildsignal $b1$ die Signalverarbeitungs- und Steuerschaltung c speist. Diese nimmt eine zentrale Steuerfunktion ein, denn sie steuert über eine eingebaute Taktgebereinheit und entsprechende Steuersignale alle wesentliche Teile der Bildaufnahmeeinrichtung, gegebenenfalls sogar die gleichzeitige Tonaufzeichnung. Erste bzw. zweite Steuersignale $s1$, $s2$ steuern z.B. die Kamera k bzw. die Digitalisierung im Analog-Digitalumsetzer $w1$.

Die Signalverarbeitungs- und Steuerschaltung c enthält ferner in der Fig. nicht dargestellte Signalverarbeitungsschaltungen für das über die erste Datenleitung $d1$ zugeführte digitale Bildsignal $b2$. Zum

Beispiel erste Filterschaltungen zur Datenreduktion der zu speichernden Daten und entsprechend zweite Filterschaltungen zur Datenexpansion mit denen diese Datenreduktion beim Auslesen wieder rückgängig gemacht werden kann. Dies ermöglicht eine optimale Ausnutzung der vorhandenen Speicherplätze der Speichereinrichtung r. Diese ist über die bidirektionale zweite Datenleitung $d2$ mit der Signalverarbeitungs- und Steuerschaltung c verbunden und wird ebenfalls von dieser über dritte Steuersignale $s3$ gesteuert.

Je nachdem wie die Speichereinrichtung r intern organisiert ist, werden die einzulesenden Daten rein seriell oder blockweise mit Blockadressen oder einzeln mit jeweils zugehöriger Adresse eingelesen. Besonders vorteilhaft ist dabei das blockweise Einlesen, weil jeder Block dann mindestens einer ganzen Bildzeile entspricht.

Die aus der Speichereinrichtung r ausgelesene Daten werden über die Signalverarbeitungs- und Steuerschaltung c dem Digital-Analogumsetzer w2 zugeführt. Dies erfolgt über die dritte Datenleitung d3, nachdem die ausgelesenen Daten in der Signalverarbeitungs- und Steuerschaltung c entsprechend aufbereitung wurden. Zum Beispiel werden Austast- und Synchron-Signale auf digitale Weise den gespeicherten Bilddaten hinzugefügt, so daß am Ausgang des Digital-Analogumsetzers w2 ein normgemäßes (PAL-, NTSC- oder SECAM - Farbfernsehstandard) FBAS-Signal fb zur Verfügung steht. Dieses speist über ein an die Ausgangsbuchse o angeschlossenes Anschlußkabel g den Eingang einer Wiederbageeinrichtung w, die beispielsweise aus einem handelsüblichen Fernsehempfänger TV besteht, dem das Ausgangssignal der erfindungsgemäßen Bildaufnahmeeinrichtung über die Antennen- oder die Videoeingangsbuchse vb zugeführt ist.

Wenn die Wiedergabeeinrichtung w einen Eingangsanschluß db für digitale Bildsignale hat, dann erübrigt sich selbstverständlich der Digital-Analogumsetzer w2, so daß die dritte Datenleitung d3 direkt auf diesen Eingangsanschluß db geführt wird. In der Fig. ist dies durch die gestrichelt dargestellte Abzweigung der dritten Datenleitung d3 angedeutet, die zum Fernsehempfänger TV geführt ist.

Die Steuerung des Digital-Analogumsetzers w2 erfolgt über vierte Steuersignale s4, die ebenfalls in der Signalverarbeitungs- und Steuerschaltung c erzeugt werden.

Unter Umständen kann es einfacher sein, die Austast- und Synchronsignale als analoge Signale erst nach der Digital-Analogumsetzung den gespeicherten Bildsignalen hinzuzufügen. Dies ist in der Figur nicht dargestellt, denn die additive Mischung der verschiedenen analogen Signale zum normgemäßen FBAS-Signal fb erfolgt dann wie bei den üblichen Kamcordern. Die Erzeugung der Austast- und Synchronsignale in der Signalverarbeitungs- und Steuerschaltung c erfolgt in diesem (analogen) Fall durch entsprechenden analoge Signalgeneratoren, die durch die zeilensynchrone Zeitablaufschaltung getriggert werden, und im digitalen Fall durch entsprechende, in einem Speicher abgelegte Datenfolgen, die ebenfalls durch die zeilensynchrone Zeitablaufsteuerung abgerufen werden.

Der Signalverarbeitungs- und Steuerschaltung c sind fünfte Steuersignale s5 zugeführt, die dem Bedienteil t mit den Bedienungstasten für Einzel-, Mehrbild- oder Szenenaufnahme, Wiedergabe usw. entstammen und die entsprechenden Funktionen der Bildaufnahmeeinrichtung auslösen.

In der Figur ist ferner als Schaltungsblock schematisch die netzunabhängige Stromversorgung p dargestellt, die über einige, lediglich angedeutete Versorgungsleitungen pl die Bildaufnahmeeinrichtung speist. Die netzunabhängige Stromversorgung p enthält neben den üblichen, in der Figur jedoch nicht dargestellten Einrichtungen wie Netzanschluß, Transformator, Gleichrichter, geregelte Gleichspannungsstufe, Batterien usw. eine Einrichtung, die einen fotoelektrisch erzeugten Ladestrom fc aus fotoelektrischen Wandlerzellen f zur Pufferung oder Ladung der Batterien verwendet. Die fotoelektrischen Wandlerzellen f können dabei an einer günstigen Stelle des Gehäuses der Bildaufnahmeeinrichtung angebracht werden, so daß sie möglichst voll vom Ungebungslicht L, insbesondere in den Nutzungspausen, getroffen werden.

Ein der Signalverarbeitungs- und Steuerschaltung c entsprechende Schaltung ist beispielsweise in dem Datenblatt, ITT Semiconductors, "VMC 2260 Video Memory Controller", Edition 1988/8, Order No. 6251-248-7E beschrieben. Diese monolithisch integrierte Schaltung betrifft einen Signalprozessor zur Speicherung eines vollständigen Fernsehbildes in (zusätzlichen) dynamischen Speichern mit wahlfreiem Zugriff. Sie enthält ferner Signalverarbeitungsschaltungen, die unter anderem der Datenreduktion der digitalisierten Bildsignale dienen, damit die erforderliche Speicherkapazität möglichst klein wird. Bei der Wiedergabe dienen andere, ebenfalls mitintegrierte Filterschaltungen dazu, diese Datenreduktion wieder rückgängig zu machen. Ferner werden mittels eines von außen zugeführten Taktsignals die erforderlichen Steuersignale erzeugt. Es können auch einzelne "Schnappschüsse" von bis zu neun verschiedenen Fernseh-Signalquellen festgehalten werden.

Bei der Bildaufnahmeeinrichtung nach der Erfindung wäre eine Speicherung der Bilddaten in einer Speichereinrichtung r mit dynamischen Speicherzellen trotz der erreichbaren hohen Speicherdichte jedoch ungünstig, weil bei diesen die Speicherfunktion ständig "aufgefrischt" werden müßte, was eine ständige elektrische Leistungszufuhr bedeutet. Daher sind nichtflüchtige Speicherzellen zur Realisierung der Speichereinrichtung r vorteilhafter, sie müssen jedoch leicht löschbar sein. Derartige elektrisch programmierbare und elektrisch löschbare Speicherzellen sind beispielsweise die handelsüblichen EEPROM-Speicher (= elektrisch lösch- und elektrisch programmierbare Speicherzellen) in VLSI-Technik (= very large scale integration).

In der Speichereinrichtung r können als nichtflüchtige Speicherzellen insbesondere auch nichtflüchtige ferroelektrische Speicherzellen verwendet werden, die beispielsweise aus US-A 47 13 157 bekannt sind. Mit diesen Speicherzellen lassen sich monolithisch integrierbare Großspeicher in VLSI-Technik erzeugen, deren Speicherdichte mit derjenigen von üblichen dynamischen Speichern vergleichbar ist.

**Ansprüche**

1. Tragbare elektronische Bildaufnahmeeinrichtung mit einer Kamera (k) für Einzelbilder öder Bilderfolgen, mit einer Speichereinrichtung (r) für die aufzunehmenden Bildsignale, mit einer Signalverarbeitungs- und Steuerschaltung (c) und mit einer netzunabhängigen Stromversorgung (p), gekennzeichnet durch folgende Merkmale:
- die Speichereinrichtung (r) enthält mindestens einen Festkörperspeicher mit nichtflüchtigen Speicherzellen,
- ein Analog-Digitalumsetzer (w1) ist zwischen der Kamera (k) und der Signalverarbeitungs- und Steuerschaltung (c) eingefügt.
- ein Digital-Analogumsetzer (w2) ist eingangsseitig mit der Signalverarbeitungs- und Steuerschaltung (c) verbunden und liefert ausgangsseitig ein Signal, das einer Wiedergabeeinrichtung (w), insbesondere einem Fernsehempfänger (TV), zugeführt ist.

2. Bildaufnahmeeinrichtung nach Anspruch 1, dadurch gekennzeichnet, daß die nichtflüchtigen Speicherzellen mindestens teilweise aus elektrisch lösch- und elektrisch programmierbaren Speicherzellen (=EEPROM) bestehen.

3. Bildaufnahmeeinrichtung nach Anspruch 1, dadurch gekennzeichnet, daß die nichtflüchtigen Speicherzellen mindestens teilweise aus ferroelektrischen Speicherzellen bestehen.

4. Bildaufnahmeeinrichtung nach einem der Ansprüche 1 bis 3, dadurch gekennzeichnet, daß die netzunabhängige Stromversorgung (p) Energiespeicher enthält, die über fotoelektrischen Wandlerzellen (f) mindestens teilweise nachladbar sind.

5. Bildaufnahmeeinrichtung nach Anspruch 1, dadurch gekennzeichnet, daß das Ausgangssignal des Digital-Analogumsetzers (w2) ein normgemäßes Farb-Bild-Austast-Synchron-Signalgemisch (=FBAS-Signal) (fb) ist.

6. Bildaufnahmeeinrichtung nach Anspruch 1, dadurch gekennzeichnet, daß ihr Ausgangssignal vor dem Digital-Analogumsetzer (w2) als digitales Signal abgegriffen und einem digitalem Eingangsanschluß (db) der Wiedergabeeinrichtung (w) zugeführt ist.

7. Bildaufnahmeeinrichtung nach einem der Ansprüche 1 bis 6, dadurch gekennzeichnet, daß zusätzlich zur Bildsignalspeicherung eine Speicherung des zugehörigen Tonsignals vorgenommen ist.

8. Bildaufnahmeeinrichtung nach einem der Ansprüche 1 bis 7, dadurch gekennzeichnet, daß die Signalverarbeitungs- und Steuerschaltung (c) erste Filterschaltungen zur Datenreduktion der zu speichernden Daten und zweite Filterschaltungen zur Datenexpansion bei der Wiedergabe enthält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 207 675 (YAMAGUCHI CINEMA CORP.)<br><br>* Seite 5, Zeile 15 - Seite 8, Zeile 12; Abbildung 2 *<br><br>-- | 1 | H 04 N 1/21<br>H 04 N 5/76<br>H 04 N 5/225 |
| X | BRITISH JOURNAL OF PHOTOGRAPHY, Band 131, Nr. 19, Mai 1984, Seiten 486-487, London, GB; B. SCOTT: Electronic camera"<br><br>* Seite 486, linke Spalte, Zeile 36 - rechte Spalte, Zeile 26; Seite 487, rechte Spalte, Zeilen 1-6 * | 1 | |
| A | -- | 3 | |
| Y | US-A-4 599 657 (KINOSHITA et al.)<br><br>* Spalte 3, Zeile 49 - Spalte 4, Zeile 22 *<br><br>-- | 1,4 | RECHERCHIERTE SACHGEBIETE (Int. Cl.4)<br><br>H 04 N 5<br>H 04 N 1 |
| Y | EP-A-0 184 138 (ENERGIE CONVERSION DEVICES)<br><br>* Seite 1, Zeile 14 - Seite 6, Zeile 35; Seite 8, Zeilen 11-34; Seite 11, Zeilen 17-32 * | 1 | |
| A | -- | 2,7,8 | |
| X | US-A-4 593 324 (OHKUBO et al.)<br><br>* Zusammenfassung * ./.<br><br>-- | 8 | |

Der vorliegende Recherchenbericht wurde für alle Patentansprüche erstellt.

| Recherchenort | Abschlußdatum der Recherche | Prüfer |
|---|---|---|
| Den Haag | 07-03-1990 | DUHR |

Europäisches
Patentamt

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

namlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## X | MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

1. Ansprüche 1,2,3,7,8: Kamera wo Festkörperspeicher mit nichtflüchtigen Speicherzellen das magnetische Speichermedium ersetzt
2. Anspruch 4: Stromversorgung
3. Ansprüche 5,6: Analoges oder digitales Ausgangsignal

☒ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind,

nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche:

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PATENT ABSTRACTS OF JAPAN, Band 12, Nr. 177, Seite E613, 25.Mai 1988; & JP-A-62 284 586 (FUJI PHOTO FILM CO LTD) 10-12-1987 * Zusammenfassung * | 4 | |
| A | PATENT ABSTRACTS OF JAPAN, Band 12, Nr. 304, Seite E646, 18. August 1988; & JP-A-63 070 672 (MITSUBISHI ELECTRIC CORP.) 30-03-1988 * Zusammenfassung * | 4 | |
| Y | US-A-4 604 668 (LEMELSON) * Spalte 2, Zeile 50 - Spalte 3, Zeile 23; Spalte 8, Zeile 51 - Spalte 11, Zeile 24; Zusammenfassung, Abbildung 4 * | 5 | RECHERCHIERTE SACHGEBIETE (Int. Cl.4) |
| Y | DE-A-3 613 271 (DEUTSCHE THOMSON-BRANDT GmbH) * Spalte 4, Zeilen 6-14; Abbildung * | 5 | |

./.

Der vorliegende Recherchenbericht wurde für alle Patentansprüche erstellt.

| Recherchenort | Abschlußdatum der Recherche | Prüfer |
|---|---|---|
| | | |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 202 009 (POLAROID COR-PORATION)<br><br>* Seite 7, Zeile 13 - Seite 10, Zeile 9; Abbildung * | 5,6 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| | | |